# EUROPÄISCHE PATENTSCHRIFT

(11) **EP 1 673 185 B1**
(45) Veröffentlichungstag und Bekanntmachung des Hinweises auf die Patenterteilung: **26.03.2008**
(21) Anmeldenummer: 04717619.3
(22) Anmeldetag: 05.03.2004
(51) Int. Cl.: B21D 39/04, F16L 37/08, F16L 37/084

(54) **VERFAHREN UND VORRICHTUNG ZUR HERSTELLUNG EINER ROHRPRESSVERBINDUNG AN EINER STECKVERBINDUNG**
METHOD AND DEVICE FOR CREATING A PRESS-FITTED PIPE JOINT WITH A PLUG-TYPE CONNECTION
PROCEDE ET DISPOSITIF POUR ETABLIR UNE LIAISON SERREE ENTRE TUBES AU NIVEAU D'UN RACCORD

(30) Priorität: 15.10.2003 DE 10347927
(43) Veröffentlichungstag der Anmeldung: 28.06.2006
(73) Patentinhaber: Henn GmbH & Co.KG, 6850 Dornbirn (AT)
(72) Erfinder: HARTMANN, Harald, A-6830 Rankweil (AT)
(74) Vertreter: Riebling, Peter
(86) Internationale Anmeldenummer: PCT/EP2004/002249
(87) Internationale Veröffentlichungsnummer: WO 2005/046906

(56) Entgegenhaltungen:
- DE-A- 19 522 690
- DE-A- 19 601 667
- DE-U- 20 111 280
- GB-A- 2 342 133
- US-A- 5 540 463

## Beschreibung

Die Erfindung betrifft ein Verfahren zur Herstellung und eine Rohrpressverbindung an einer Steckverbindung nach dem Oberbegriff des Patentanspruches 1, bzw. nach dem Oberbegriff des Patentanspruches 3. Derartige Steckverbindungen werden für die Verbindung von Rohren an festen Anschlusstellen, vorwiegend im Fahrzeugbau, verwendet. Unter dem Begriff "Fahrzeugbau" werden hierbei an Land-, Wasser-und Luftfahrzeuge verstanden.

Eine Steckverbindung ist in der Regel durch einen Stecker gekennzeichnet, der werkstoffein- oder mehrstückig mit einem Schlauch oder Rohr verbunden ist, wobei dieser Stecker mit dem daran ansetzenden Schlauch oder Rohr mit einem Stutzen zusammengesteckt werden kann. Es handelt sich um eine lösbare Steckverbindung, wobei als Befestigungsmittel eine Rastfeder verwendet wird, welche die Rastverbindung zwischen dem Stecker und dem Stutzen herstellt. Statt einer Rastfeder können auch andere lösbare Verbindungselemente verwendet werden, wie z. B. Biegefedern, Haken oder andere die Steckverbindung herstellende Formschlusselemente.

Bei derartigen Steckverbindungen besteht das Problem, dass man an einem Steckverbinder ein Rohr geringeren Durchmessers anschließen will, welches abdichtend beispielsweise in den Stutzen eingeführt wird.

Bisher war dieses Problem nur dadurch gelöst worden, dass der Stutzen werkstoffeinstückig an dem anzusetzenden Rohr angeformt war, was mit hohem Materialaufwand und hohen Herstellungskosten verbunden war.

In einigen Fällen ist dies nicht möglich, wenn beispielsweise ein Rohr mit relativ geringem Durchmesser an einen Stutzen mit großem Durchmesser angeformt werden soll.

Ebenso ist es bekannt, das abdichtend an den Stutzen anschließbare Rohr mit herkömmlichen Verbindungsmitteln, wie z.B. Löten, Schweißen oder Kleben, am Stutzen anzubringen. Dies erfordert jedoch einen erhöhten Arbeitsaufwand mit der Gefahr einer undichten Anschlussstelle.

Mit der Druckschrift GB 2342133 A wird eine Rohrkupplung zur Verwendung in einem Hydrauliksystem offenbart, wobei an eine Einstecköffnung eines Stutzens abdichtend ein Rohr geringeren Durchmessers abdichtend angeschlossen wird, wobei das anzuschließende Rohr in die Einstecköffnung mit radialem Spiel (Einführspalt) eingesteckt wird und in den Innendurchmesser des Rohres ein Aufweitdorn eingeschoben wird, welcher das Rohr radial auswärts in Richtung auf einen stutzenseitigen, innenliegenden Führungsstutzen unter radialer Aufweitung verformt.

Der Erfindung liegt die Aufgabe zugrunde, eine Steckverbindung der eingangs genannten Art so weiterzubilden, dass mit einfachen Mitteln ein mindestens teilweise radial verformbares Rohr abdichtend in die Aufnahmeöffnung des Stutzens eingesetzt werden kann.

Zur Lösung der gestellten Aufgabe ist die Erfindung durch die technische Lehre der Ansprüche 1 und 3 gekennzeichnet.

Vorteilhaft ist an der Stirnseite des Stutzens radial innenliegend mindestens ein Dichtring angeordnet, dessen Sitz sich axial einwärts durch einen Führungsstutzen fortsetzt, der an seinem axialen Ende einen Anschlag verringerten Durchmessers ausbildet und dass in diese so vorbereitete Öffnung das Rohr mit geringerem Durchmesser eingesteckt ist und in den Innendurchmesser dieses Rohres ein Aufweitdorn eingeschoben wird, welcher das Rohr radial auswärts in Richtung auf den stutzenseitigen Führungsstutzen verformt und hierbei den Führungsstutzen ebenfalls radial auswärts mit verformt.

Mit der gegebenen technischen Lehre wird demgemäss eine Pressverbindung beschrieben, die darin besteht, dass man das Rohr mit geringerem Durchmesser in die Öffnung des Stutzens einführt und von der Stutzenseite her einen Aufweitdorn in den Innenumfang des Rohres einschiebt, welcher bestimmte Rohrquerschnitte radial nach außen verformt und diese damit dichtend an den Innenumfang der im Stutzen angeordneten Führungsteile anlegt, wobei diese Führungsteile ebenfalls noch teilweise mit radial auswärts verformt werden.

Mit dieser Art von Pressverbindung wird der wesentliche Vorteil erzielt, dass eine simultane Aufweitung des einzupassenden Rohres in Verbindung mit den im Stutzen angeordneten Führungs- und Abdichtteilen erfolgt. Daher erfolgt durch den Aufweitdorn eine formschlüssige Anlage der einander zugeordneten Teile von Rohr und Stutzen, so dass auch entsprechende Ungleichmäßigkeiten oder Ungenauigkeiten bei der Fertigung ausgeglichen werden.

Durch einen einzigen Fertigungszug (nämlich Einfahren des Aufweitdornes) und eine entsprechende Aufweitung entsteht sowohl eine radiale Verpressung als auch eine axiale Anlage und Verschiebebegrenzung des Rohres in dem Stutzen.

Vorstehend wurde erwähnt, dass der im Stutzen angeordnete Führungsstutzen einen die axiale Verschiebung des Rohres in den Stutzen begrenzendem stirnseitigen Anschlag aufweist. Hierauf ist die Erfindung jedoch nicht angewiesen. Dieser Anschlag kann auch entfallen, und stattdessen kann an der Außenseite des Rohres ein radial auswärts gerichteter Anschlag vorhanden sein, der an der zugeordneten Stirnfläche der Öffnung des Stutzens anschlägt.

Im Übrigen ist die Erfindung nicht auf ein metallisches Rohr zur Herstellung der Pressverbindung beschränkt. Es können auch Rohre aus einem Mehrkomponenten-Werkstoff verwendet werden.

Beispielsweise ist es auch möglich, ein Kunststoffrohr zu verwenden und in das Kunststoffrohr eine aufweitbare oder bleibend verformbare Metallhülse (bevorzugt aus einer Aluminiumlegierung) einzusetzen. Mit der bleibenden Verformung der dort eingesetzten metallischen Hülse wird damit auch der Querschnitt des Kunststoffrohres bleibend verformt und bildet so einen Dichtungseingriff an dem stutzenseitigen Dichtring.

Anstatt des vorgesehenen Dichtrings können jedoch auch andere Dichtungsmittel verwendet werden, wie z.B. eine Dichtmasse, die in einer entsprechenden Nut angeordnet ist und sich abdichtend am Außenumfang des Rohres anlegt.

Ebenso kann ein Dichtband verwendet werden, welches am Außenumfang des Rohres angeordnet ist und welches eine dementsprechende Dichtungsanlage an der gegenüberliegenden Fläche an der Innenseite des Stutzens einnimmt.

Die gleichen Werkstoffkombinationen, wie sie anhand des vorbeschriebenen Rohres dargestellt wurden, können im Übrigen auch für den Stutzen verwendet werden. So ist es z.B. möglich, den Stutzen aus einem Kunststoffmaterial zu fertigen und innenseitig eine metallische Hülse einzusetzen, welche den Führungsstutzen trägt, der dann entsprechend radial bleibend aufweitbar ist.

Diese metallische Hülse kann jedoch in einer dritten Ausführungsform entfallen, und es reicht aus, den Stutzen insgesamt aus einem Kunststoffmaterial auszubilden, wobei lediglich die im Innenraum des Stutzens angeordneten Führungs- und Dichtflächen (insbesondere im Bereich des Führungsstutzens) elastisch verformbar sind, um so ebenfalls einen entsprechenden Dichtungs- und Anpressdruck an dem radial aufweitbaren Rohr zu erbringen.

Die genannte Steckverbindung gilt für den Anschluss sämtlicher bekannter Medien, insbesondere Luft, Wasser und andere fließfähige Medien und Gase im Fahrzeugbau, wie in der eingangs benannten Beschreibung erwähnt wurde.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Steckverbindung nach der Erfindung in auseinandergezogener Darstellung mit einem fertig darin verpressten Rohr
- Figur 2:: eine teilweise Darstellung der Verbindung zwischen dem Rohr und dem Stutzen in unverpresstem Zustand
- Figur 3:: die Steckverbindung nach Figur 1 im zusammengesteckten Zustand

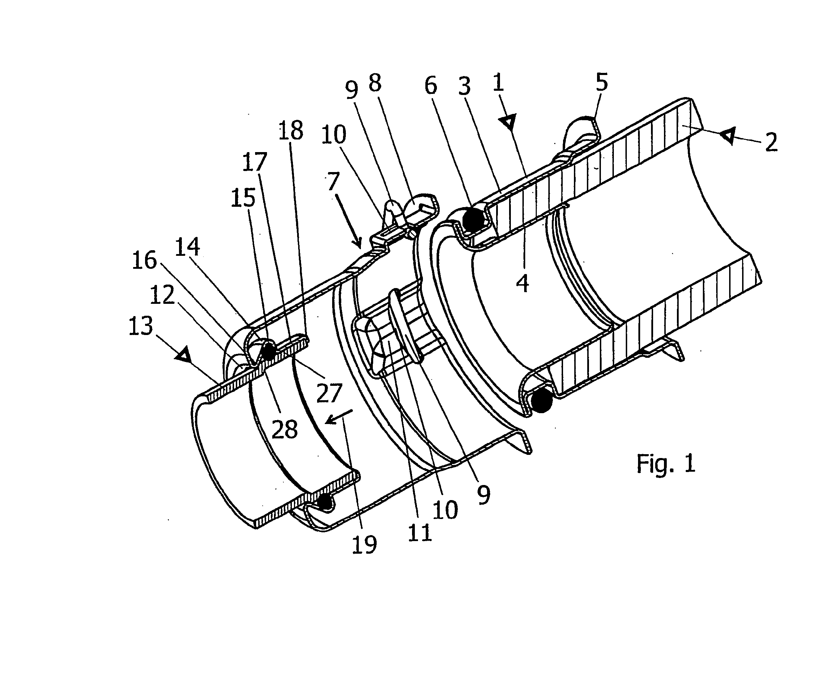

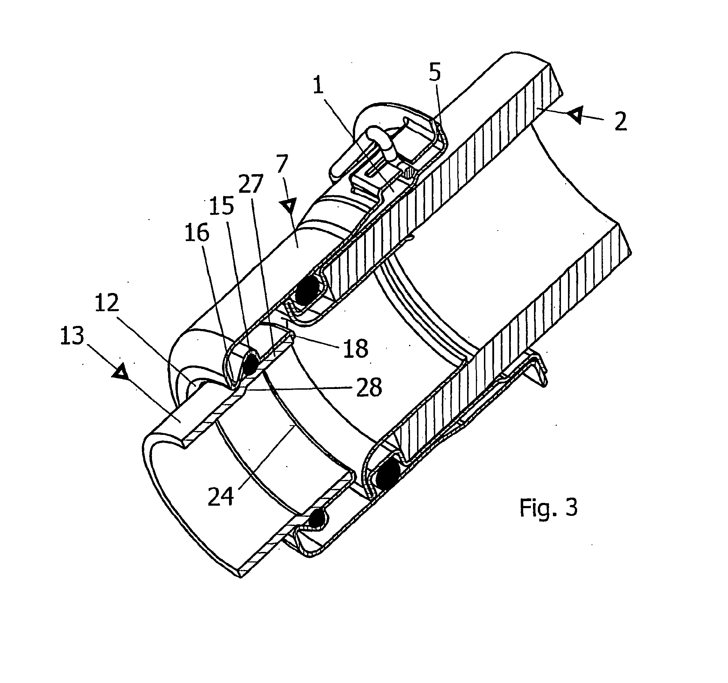

Im Ausführungsbeispiel nach den Figuren 1 bis 3 besteht die Steckverbindung im Wesentlichen aus einem Stecker 1, der bevorzugt aus einem metallischen Material besteht. Dieser Stecker 1 besteht aus einer Außenhülse 3, die über eine entsprechende Bördelung werkstoffeinstückig mit einer Innenhülse 4 verbunden ist. Im Aufnahmeraum zwischen den beiden Hülsen 3, 4 ist in an sich bekannter Weise ein Schlauch 2 eingeschoben. Dieser wird dann mit einer Pressverbindung fixiert (nicht dargestellt).

Es versteht sich von selbst, dass der Stecker 1 auch anders ausgebildet sein kann. Zum Beispiel kann er unmittelbar mit einem Schlauch 2 verbunden sein, so dass die beiden Teile 1, 2 ein werkstoffeinstückiges Teil bilden. Hierbei ist der Stecker als Kunststoffteil werkstoffeinstückig mit dem aus Kunststoff bestehenden Schlauch verbunden.

Der Stecker 1 bildet an seiner hinteren Seite einen ringsumlaufenden Anschlagflansch 5, der mit einem zugeordneten Anschlagflansch 8 an einen damit verbindbaren Stutzen 7 zusammenwirkt. Die beiden Teile (Stecker 1 und Stutzen 7) sind im zusammengesteckten Zustand abgedichtet zusammengesteckt, wobei der O-Ring 6 die Dichtverbindung herstellt.

Der Stutzen 7 besteht ebenfalls aus einem hülsenförmigen, metallischen Material,
wobei der Stutzen auch aus einem Kunststoffmaterial gebildet sein kann. Er trägt eine Rastfeder 9, welche durch zugeordnete Schlitze 10 hindurchgreift und im Übrigen auch eine Verschiebeführung 11, für das drehgesicherte Aufstecken des Steckers 1 in den Stutzen 7.

Der Stutzen 7 bildet an seiner vorderen Seite eine zentrische Öffnung 12, in welche mit der erfindungsgemäßen Pressverbindung ein Rohr 13 abdichtend eingesteckt und dort festgelegt werden soll.

Zu diesem Zweck weist der Stutzen einen entsprechenden Innenaufbau auf, wobei von der Öffnung 12 ausgehend eine radial einwärts gerichtete Ringsicke 16 angeordnet ist, welche die Öffnung 12 ringsumlaufend begrenzt.

Axial einwärts gerichtet erstreckt sich von der Ringsicke 16 aus eine mit größerem Durchmesser sich erweiternde Ringnut 14, in der ein O-Ring 15 angeordnet ist.

Die Ringnut 14 geht wiederum in einen axial gerichteten Führungsstutzen 17 über, an dessen vorderer Stirnseite eine Anschlagkante 18 angeordnet ist.

In diesen so vorbereiteten Innenaufbau des Stutzens 7 soll nun das Rohr 13 abdichtend mit dem erfindungsgemäßen Presssitz festgelegt werden.

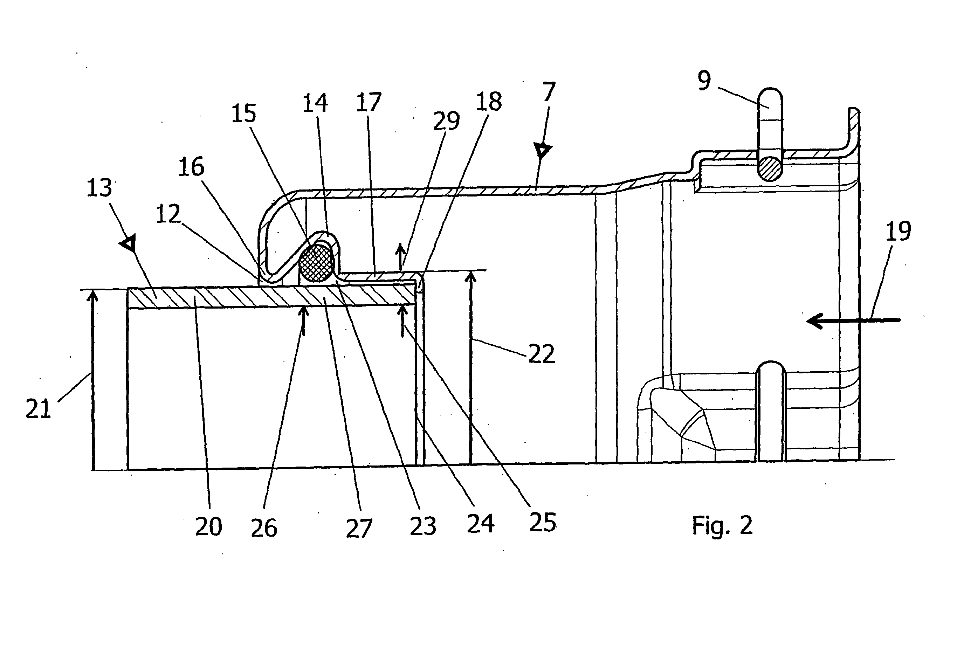

Hierzu weist nach Figur 2 das unvorbereitete und unbearbeitete Rohr 13 einen kleineren Rohrdurchmesser 21 auf, der kleiner ist als der Innendurchmesser 22 des Führungsstutzens 17 am Stutzen 7.

Auf diese Weise bildet sich ein genügend großer Einführspalt 23 für die Einführung des Rohres 13 in den Innenraum des Stutzens 7. Die Durchmesserabweichung zwischen den beiden Durchmessern 21, 22 ist jedoch so gewählt, dass die vordere Stirnseite 24 des Rohres 13 an dem vorher erwähnten Anschlagflansch 8 des Führungsstutzens 17 anschlägt.

In dieser - in Figur 2 gezeigten Lage - wird nun in Pfeilrichtung 19 ein nicht näher dargestellter Einführdorn in die rechte Seite des Stutzens 7 eingeführt, der in den Innenraum des Rohres 13 eindringt. Wichtig ist nun, dass die Aufweitung des Rohres 13 nur in den Bereichen des Rohres zwischen den Positionen 25, 26 erfolgt, so dass nur dieser Bereich aufgeweitet werden. Der aufzuweitende Bereich liegt in axialer Richtung hinter der vorderen Stirnseite 24 des Rohres 13, die nicht notwendigerweise aufgeweitet sein muss und bevorzugt vor Ringsicke 16 des Stutzens 7, die ebenfalls nicht aufgeweitet wird.

Nach der Aufweitung ergibt sich ein radial nach außen gerichteter Pressschenkel 27 mit vergrößertem Durchmesser. Der Durchmesser ist so groß gewählt, dass sich bei der Aufweitung gleichzeitig noch der Führungsstutzen 17 in Pfeilrichtung 29 gleichfalls radial auswärts verformt. Hierbei wird der O-Ring 15 abdichtend unter gleichzeitiger elastischer Verformung an den Außenumfang des Pressschenkels 27 angelegt und die Pressverbindung ist damit einwandfrei abgedichtet hergestellt, weil sich auch die Stirnseite 24 sich in den Anschlagflansch 8 des Führungsstutzens 17 einformt und einpasst.

Diese Verhältnisse sind in Figur 1 deutlich dargestellt. Wichtig ist, dass der Übergang von dem radial nach außen verformbaren Pressschenkel und dem unverformten Querschnitt des Rohres durch eine schräg verlaufende Stufe 28 gebildet wird, die demzufolge eine Anschlagfläche an der Ringsicke 16 des Stutzens 7 im Bereich der Öffnung 12 bildet. Damit ist eine absolute Verschiebungssicherung in beiden Richtungen gegeben, weil in der einen Richtung wird eine axiale Verschiebung durch Anlage der Stirnseite 24 an der Anschlagkante 18 verhindert und in der anderen Richtung die Anlage der Stufe 28 an der Ringsicke 16.

Es ergibt sich damit eine sehr einfache, günstige und nur in einem einzigen Arbeitsvorgang herstellbare Pressverbindung, ohne dass das Rohr 13 in irgendeiner Weise vorbereitet oder behandelt werden muss. Der zylindrische Innenumfang wird durch den Aufweitdorn in einem einzigen Arbeitsgang im Bereich des Pressschenkels 27 verformt, wobei gleichzeitig auch der Innenaufbau des Stutzens 7 im Bereich des Führuhgsstutzens 17 ebenfalls radial auswärts verformt wird.

Eine bleibende Verformung des Führungsstutzens 17 ist nicht gefordert. Es kann sich auch um eine elastische Verformung handeln, weil das Rohr 13 die bleibende Verformung im Bereich des Pressschenkels 27 aufrecht erhält.

Nachdem die Steckverbindung im Fahrzeugbau eingesetzt wird, hat ein solcher Stutzen einen Innendurchmesser von etwa 10 bis 100 mm. Ein dort in die Öffnung 12 einzupassendes Rohr hat demzufolge einen Durchmesser von etwa 8 bis 80 mm.

Die im Bereich des Pressschenkels 27 radial nach außen gerichtete Verformung hat eine Durchmesservergrößerung von etwa 1 bis 2 mm zur Folge.

Daraus folgt, dass das Rohr 13 nur eine geringe radiale Verformbarkeit aufweisen muss, wodurch man in der Auswahl des Materials des Rohres große Freiheit erhält.

### Zeichnungslegende

- 1.: Stecker
- 2.: Schlauch
- 3.: Außenhülse
- 4.: Innenhülse
- 5.: Anschlagflansch
- 6.: O-Ring
- 7.: Stutzen
- 8.: Anschlagflansch
- 9.: Rastfeder
- 10.: Schlitz
- 11.: Verschiebeführung
- 12.: Einstecköffnung
- 13.: Rohr
- 14.: Ringnut
- 15.: O-Ring
- 16.: Ringsicke
- 17.: Führungsstutzen
- 18.: Anschlagkante
- 19.: Pfeilrichtung
- 20.: Rohrwandung
- 21.: Rohrdurchmesser
- 22.: Durchmesser (Führungsstutzen 17)
- 23.: Einführspalt
- 24.: Stirnseite
- 25.: Position
- 26.: Position
- 27.: Preßschenkel
- 28.: Stufe
- 29.: Pfeilrichtung

## Patentansprüche

1. Verfahren zur Herstellung einer Rohrpressverbindung an einer Steckverbindung für die Verbindung von Rohren an festen Anschlussstellen im Fahrzeugbau, wobei an eine Einstecköffnung (12) eines Stutzens (7) abdichtend ein Rohr (13) geringeren Durchmessers abdichtend angeschlossen wird, wobei das anzuschließende Rohr (13) in die Einstecköffnung (12) mit radialem Spiel eingesteckt wird und in den Innendurchmesser des Rohres (13) ein Aufweitdorn eingeschoben wird, **dadurch gekennzeichnet, dass** der Aufweistdorn das Rohr (13) radial auswärts in Richtung auf einen stutzenseitigen, innenliegenden Führungsstuzen (17) unter radialer Aufweitung verformt, und der mit dem Stutzen (7) verbundene, innenliegende Führungsstutzen (17) zusätzlich mit dem Rohr (13) aufgeweitet wird.

2. Verfahren nach Anspruch 1, **dadurch gekennzeichnet, dass** mit der simultanen Aufweitung von Rohr (13) und Führungsstutzen (17) auch eine axiale Anlage und Verschiebebegrenzung des Rohres (13) in dem Stutzen (7) hergestellt wird.

3. Rohrpressverbindung zwischen einer aus einem Stutzen (7) und Stecker (1) bestehenden Steckverbindung und einem Rohr (13), wobei an eine Einstecköffnung (12) des Stutzens (7) abdichtend ein Rohr (13) geringeren Durchmessers abdichtend eingesteck ist **dadurch gekennzeichnet, dass** das Rohr im Durchmesser radial auswärts in Richtung auf einen stutzenseitigen, innenliegenden Führungsstutzen (17) mittels einem eingeschobenen Aufweitdorn aufgeweitet ist und sich an der Innenseite des Führungsstutzens (17) abdichtend anlegt, und der mit dem Stutzen verbundene, innenliegende Führungsstutzen (17) zusätzlich mit dem Rohr (13) aufgeweitet ist.

4. Rohrpressverbindung nach Anspruche 3, **dadurch gekennzeichnet, dass** das Rohr (13) aus einem Metallmaterial besteht.

5. Rohrpressverbindung nach einem der Ansprüche 3 oder 4, **dadurch gekennzeichnet, dass** das Rohr (13) aus einem Kunststoffmaterial besteht.

6. Rohrpressverbindung nach einem der Ansprüche 3 bis 5, **dadurch gekennzeichnet, dass** das Rohr (13) aus einem Metall-Kunststoffverbundmaterial besteht.

7. Rohrpressverbindung nach einem der Ansprüche 3 bis 6 **dadurch gekennzeichnet, dass** lediglich der aufweitbare Querschnitt des Rohres (13) aus Metall oder aus einem Kunststoff oder einem Metall- Kunststoffverbundmaterial besteht.

8. Rohrpressverbindung nach einem der Ansprüche 3 bis 7, **dadurch gekennzeichnet, dass** lediglich der aufweitbare Querschnitt des Führungsstutzens (17) aus Metall oder aus einem Kunststoff oder einem Metall-Kunststoffverbundmaterial besteht.

9. Rohrpressverbindung nach einem der Ansprüche 3 bis 8, **dadurch gekennzeichnet, dass** am Stutzen (7) von der Einstecköffnung (12) ausgehend eine radial einwärts gerichtete Ringsicke (16) angeordnet ist, an die sich eine mit größerem Durchmesser erweiterte Ringnut (14) anschließt, in der ein O-Ring (15) angeordnet ist und dass die Ringnut (14) in einen axial gerichteten Führungsstutzen (17) übergeht, an dessen vorderer Stirnseite eine Anschlagkante (18) angeordnet ist.

10. Rohrpressverbindung nach einem der Ansprüche 3 bis 9, **dadurch gekennzeichnet, dass** das Rohr (13) ein radial nach außen gerichteter Pressschenkel (27) mit vergrößertem Durchmesser ausbildet und dass der Pressschenkel (27) bei der Aufweitung noch den Führungsstutzen (17) in Pfeilrichtung 29 radial auswärts gerichtet verformt und sich an diesen abdichtend anlegt.

11. Rohrpressverbindung nach einem der Ansprüche 3 bis 10, **dadurch gekennzeichnet, dass** der Übergang von dem radial nach außen verformbaren Pressschenkel (27) und dem unverformten Querschnitt des Rohres (13) durch eine schräg verlaufende Stufe (28) gebildet ist, die eine Anschlagfläche an der Ringsicke (16) des Stutzens (7) im Bereich der Einstecköffnung (12) bildet.

## Claims

1. Method for producing a press-fitted pipe joint on a plug-type connection for connecting pipes, hoses and the like to fixed connecting points in the motor vehicle industry, according to which a pipe (13) having a smaller diameter is connected to an insertion opening (12) of a connecting sleeve (7) in a sealing manner, according to which the pipe (13) to be connected is inserted into the insertion opening (12) with radial play and an expanding mandrel is pushed into the internal diameter of the pipe (13), said mandrel causing the pipe (13) to deform in a radially outward direction, with radial expansion, in the direction of an internally located guide sleeve (17) on the sleeve side, **characterized in that** the internally located guide sleeve (17) attached to the sleeve (7) is additionally caused to expand together with the pipe (13).

2. Method according to Claim 1, **characterized in that** an axial support and displacement limitation for the pipe (13) is also produced in the sleeve (7) in conjunction with the simultaneous expansion of the pipe (13) and the guide sleeve (17).

3. Press-fitted pipe joint between a plug-type connection, consisting of a sleeve (7) and a plug (1), and a pipe (13), according to which a pipe (13) having a smaller diameter is connected to an insertion opening (12) of the sleeve (7) in a sealing manner and is caused to expand radially outwards on its diameter in the direction of an internally located guide sleeve (17) on the sleeve side by means of an inserted expanding mandrel, and makes contact with the inside of the guide sleeve (17) in a sealing manner, **characterized in that** the internally located guide sleeve (17) attached to the sleeve is additionally caused to expand together with the pipe (13).

4. Press-fitted pipe joint according to Claim 3, **characterized in that** the pipe (13) consists of a metal material.

5. Press-fitted pipe joint according to one of Claims 3 or 4, **characterized in that** the pipe (13) consists of a plastic material.

6. Press-fitted pipe joint according to one of Claims 3 to 5, **characterized in that** the pipe (13) consists of a metal/plastic composite material.

7. Press-fitted pipe joint according to one of Claims 3 to 6, **characterized in that** only the expandable cross section of the pipe (13) consists of metal or a plastic or a metal/plastic composite material.

8. Press-fitted pipe joint according to one of Claims 3 to 7, **characterized in that** only the expandable cross section of the guide sleeve (17) consists of metal or a plastic or a metal/plastic composite material.

9. Press-fitted pipe joint according to one of Claims 3 to 8, **characterized in that**, starting from the insertion opening (12) on the sleeve (7), there is arranged a radially inward oriented annular bead (16), to which an expanded annular groove (14) with a greater diameter adjoins, and in which an O-ring (15) is arranged, and **in that** the annular groove (14) graduates into an axially oriented guide sleeve (17), arranged on the front end face of which is an abutment edge (18).

10. Press-fitted pipe joint according to one of Claims 3 to 9, **characterized in that** the pipe (13) constitutes a press limb (27) having a larger diameter that is oriented radially outwards, and **in that** the press limb (27), in conjunction with expansion, continues to deform the guide sleeve (17) radially outwards in the direction of the arrow 29 and abuts against this in a sealing manner.

11. Press-fitted pipe joint according to one of Claims 3 to 10, **characterized in that** the graduation from the press limb (27) that is capable of being deformed radially outwards and the undeformed cross section of the pipe (13) is constituted by a step (28) having an inclined orientation, which forms an abutment surface on the annular bead (16) of the sleeve (7) in the area of the insertion opening (12).

## Revendications

1. Procédé pour établir une liaison serrée entre tubes au niveau d'un raccord à enfichage pour la liaison de tubes à des emplacements de raccordement fixes en construction automobile, dans lequel un tube (13) de plus faible diamètre est raccordé de façon étanche dans une ouverture d'enfichage (12) d'une pipe (7), le tube à raccorder (13) étant enfiché avec jeu radial dans l'ouverture d'enfichage (12), et un mandrin d'élargissement étant enfilé dans le diamètre intérieur du tube (13),
**caractérisé en ce que** le mandrin d'élargissement déforme le tube (13) radialement vers l'extérieur en direction d'un moignon de guidage intérieur (17) côté pipe sous élargissement radial, et le moignon de guidage intérieur (17) relié à la pipe (7) est en supplément élargi avec le tube (13).

2. Procédé selon la revendication 1, **caractérisé en ce qu'**avec l'élargissement simultané du tube (13) et du moignon de guidage (17), on établit également un appui axial et une limitation du déplacement du tube (17) dans la pipe (7).

3. Liaison serrée entre tubes, établie entre une liaison à enfichage constituée par une pipe (7) et par un élément enfichable (1), et un tube (13), dans laquelle un tube (13) de plus faible diamètre est enfiché de façon étanche dans une ouverture d'enfichage (12) de la pipe (7),
**caractérisée en ce que** le tube est élargi en diamètre radialement vers l'extérieur en direction d'un moignon de guidage intérieur (17) côté pipe, au moyen d'un mandrin d'élargissement introduit, et vient s'appliquer de façon étanche contre la face intérieure du moignon de guidage (17), et le moignon de guidage intérieur (17) relié à la pipe est en outre élargi avec le tube (13).

4. Liaison serrée entre tubes selon la revendication 3, **caractérisée en ce que** le tube (13) est en un matériau métallique.

5. Liaison serrée entre tubes selon l'une des revendications 3 ou 4,
**caractérisée en ce que** le tube (13) est en une matière synthétique.

6. Liaison serrée entre tubes selon l'une des revendications 3 à 5,
**caractérisée en ce que** le tube (13) est en matériau composite métal/matière synthétique.

7. Liaison serrée entre tubes selon l'une des revendications 3 à 6,
**caractérisée en ce que** seule la section à élargir du tube (13) est en métal ou en matière synthétique ou en composite métal/matière synthétique.

8. Liaison serrée entre tubes selon l'une des revendications 3 à 7,
**caractérisée en ce que** seule la section à élargir du moignon de guidage (17) est en métal ou en matière synthétique ou en composite métal/matière synthétique.

9. Liaison serrée entre tubes selon l'une des revendications 3 à 8,
**caractérisée en ce qu'**une moulure annulaire (16) dirigée radialement vers l'intérieur est agencée sur la pipe (7) en partant de l'ouverture d'enfichage (12), moulure à laquelle se raccorde une gorge annulaire (14) élargie de plus grand diamètre, dans laquelle est agencé un joint torique (15), et **en ce que** la gorge annulaire (14) se transforme en un moignon de guidage (17) dirigé axialement, à la face frontale antérieure duquel est agencée une arête de butée (18).

10. Liaison serrée entre tubes selon l'une des revendications 3 à 9,
**caractérisée en ce que** le tube (13) forme une branche de serrage (27) dirigée radialement vers l'extérieur avec un diamètre agrandi, et **en ce que** la branche de serrage (27) se déforme radialement vers l'extérieur lors de l'élargissement du moignon de guidage (17) en direction de la flèche 29, et s'applique de façon étanche contre celui-ci.

11. Liaison serrée entre tubes selon l'une des revendications 3 à 10,
**caractérisée en ce que** la transition de la branche de serrage (27) déformable radialement vers l'extérieur et de la section non déformée du tube (13) est formée par un gradin (28) s'étendant en oblique, qui forme une surface de butée au niveau de la moulure annulaire (16) de la pipe (7) dans la région de l'ouverture d'enfichage (12).
